# EUROPEAN PATENT APPLICATION

(11) **EP 4 841 250 A1**
(43) Date of publication of application: **18.11.2026**
(21) Application number: 24917136.4
(22) Date of filing: 12.11.2024
(51) Int. Cl.: G01N 23/2055, G01N 17/00

(54) **REMAINING SERVICE LIFE ESTIMATION METHOD, REMAINING SERVICE LIFE ESTIMATION DEVICE, AND REMAINING SERVICE LIFE ESTIMATION PROGRAM**

(30) Priority: 10.01.2024 JP 2024002016
(71) Applicant: IHI Corporation, Koto-ku Tokyo 135-8710 (JP)
(72) Inventor: OTA, Yutaro, Tokyo 135-8710 (JP)
(74) Representative: MERH-IP Matias Erny Reichl Hoffmann Patentanwälte PartG mbB
(86) International application number: PCT/JP2024/040146
(87) International publication number: WO 2025/150262

(57) **Abstract**

A remaining life estimation method, a remaining life estimation device, and a remaining life estimation program acquire a map generated based on a backscatter diffraction pattern by backscattered electrons from a material when the material is irradiated with an electron beam. From the map, a range of a predetermined number of crystal grains up to a propagation plane of a crack occurred in the material is extracted as a specific range. An index value based on crystal orientation of the material in the specific range is generated. A load condition is specified based on the index value in the specific range. A remaining life of the material is estimated based on the surface crack length of the crack by referring to a relationship between surface crack length and life ratio under the load condition.

## Description

### TECHNICAL FIELD

The present disclosure relates to a remaining life estimation method, a remaining life estimation device, and a remaining life estimation program.

### BACKGROUND ART

Patent Literature 1 discloses a method for evaluating crack propagation rate of a material by measuring crystal orientations at multiple measurement points within a region including a crack tip in a metal material using the EBSP method. In this method, orientation difference function values indicating the deviation of crystal orientation at each measurement point are analyzed to obtain an evaluation parameter of the material, and the crack propagation rate of the material is evaluated based on the evaluation parameter.

### CITATION LIST

### PATENT LITERATURE

Patent Literature 1: Japanese Patent Application Laid-Open No. 2012-73126

### SUMMARY OF THE INVENTION

### TECHNICAL PROBLEM

According to the technique described in Patent Literature 1, there is a problem that the tip position of a crack actually occurred in a material and the load condition related to the strain that caused the crack cannot be directly measured, or complicated calculations are required when attempting to estimate them.

The present disclosure has been made in view of the above problems. The object thereof is to provide a remaining life estimation method, a remaining life estimation device, and a remaining life estimation program capable of determining the tip position of a crack actually occurred in a material and the load condition related to the strain that caused the crack, and estimating the remaining life of the material.

### SOLUTION TO PROBLEM

A remaining life estimation method according to the present disclosure acquires a map generated based on a backscatter diffraction pattern by backscattered electrons from a material when the material is irradiated with an electron beam. From the map, a range of a predetermined number of crystal grains up to a propagation plane of a crack occurred in the material is extracted as a specific range. An index value based on crystal orientation of the material in the specific range is generated. A load condition is specified based on the index value in the specific range. The remaining life of the material is estimated based on the surface crack length of the crack by referring to a relationship between surface crack length and life ratio under the load condition.

The load condition may be specified based on a specific average value that is an average of the index values in the specific range.

The predetermined number may be two.

A length of the specific range along a propagation direction of the crack, or a direction perpendicular to a surface of the material, may be five times or more a diameter of crystal grains contained in the material.

A length of the specific range along a propagation direction of the crack, or a direction perpendicular to a surface of the material, may be 25 times or less a diameter of crystal grains contained in the material.

A value indicating an average of differences between crystal orientation at an adjacent pixel adjacent to a pixel and crystal orientation at the pixel may be calculated as the index value, wherein the pixel belongs to the map and is within a crystal grain contained in the material, and the adjacent pixel is within the crystal grain contained in the material.

An average value of crystal orientations at pixels in crystal grains contained in the material may be calculated. A value indicating an average of differences of crystal orientation at the pixels from the average value may be calculated as the index value.

A remaining life estimation device according to the present disclosure includes an acquisition unit and a controller. The acquisition unit acquires a map generated based on a backscatter diffraction pattern by backscattered electrons from a material when the material is irradiated with an electron beam. The controller extracts from the map a range of a predetermined number of crystal grains up to a propagation plane of a crack occurred in the material as a specific range. The controller generates an index value based on crystal orientation of the material in the specific range. The controller specifies a load condition based on the index value in the specific range. The controller estimates the remaining life of the material based on the surface crack length of the crack by referring to a relationship between surface crack length and life ratio under the load condition.

A remaining life estimation program according to the present disclosure processes a map generated based on a backscatter diffraction pattern by backscattered electrons from a material when the material is irradiated with an electron beam. The program causes a computer to extract from the map a range of a predetermined number of crystal grains up to a propagation plane of a crack occurred in the material as a specific range. The program causes the computer to generate an index value based on crystal orientation of the material in the specific range. The program causes the computer to specify a load condition based on the index value in the specific range. The program causes the computer to estimate the remaining life of the material based on the surface crack length of the crack by referring to a relationship between surface crack length and life ratio under the load condition.

### ADVANTAGEOUS EFFECTS OF INVENTION

According to the present disclosure, it is possible to determine the tip position of a crack actually occurred in a material and the load condition related to the strain that caused the crack, and estimate the remaining life of the material.

### BRIEF DESCRIPTION OF DRAWINGS

[Fig. 1] Fig. 1 is a block diagram showing a configuration of a remaining life estimation device according to an embodiment of the present disclosure.
[Fig. 2] Fig. 2 is a flowchart showing a processing procedure of the remaining life estimation device.
[Fig. 3] Fig. 3 is a diagram showing an example of a map.
[Fig. 4] Fig. 4 is a diagram showing an example of a map from which only a specific range is extracted.
[Fig. 5] Fig. 5 is a diagram showing an example of a relationship between an average value of index values and load conditions in the specific range.
[Fig. 6] Fig. 6 is a diagram showing an example of a relationship between surface crack length and life ratio.

### DESCRIPTION OF EMBODIMENTS

Hereinafter, some exemplary embodiments will be described with reference to the drawings. In each drawing, common parts are denoted by the same reference numerals, and redundant descriptions are omitted.

### (Configuration of Remaining Life Estimation Device)

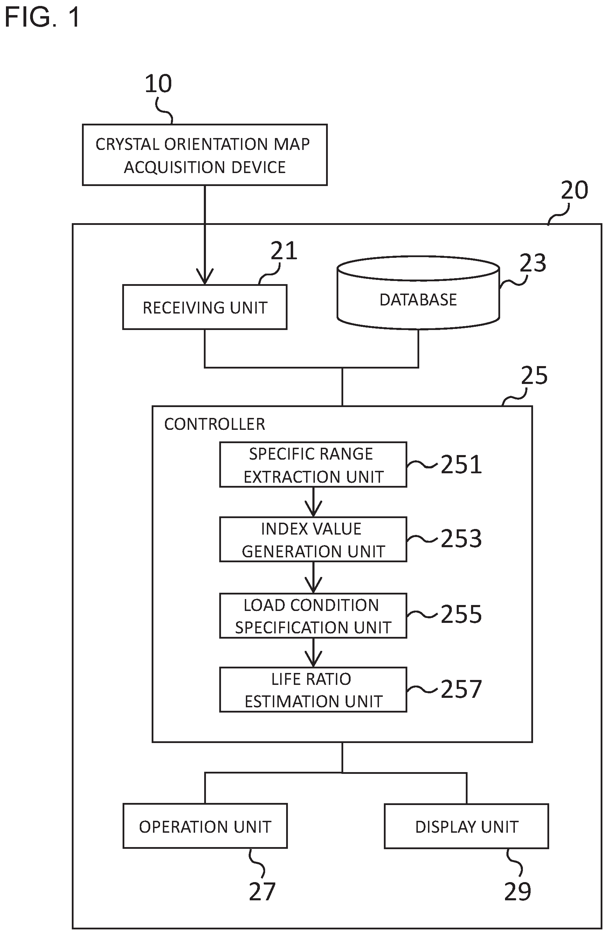

Fig. 1 is a block diagram showing a configuration of a remaining life estimation device according to an embodiment of the present disclosure. As shown in Fig. 1, the remaining life estimation device 20 includes a receiving unit 21, a database 23, and a controller 25. In addition, the remaining life estimation device 20 may include an operation unit 27 and a display unit 29. The controller 25 is connected to be able to communicate with the receiving unit 21, the database 23, the operation unit 27, and the display unit 29.

In addition, the operation unit 27 and the display unit 29 may be provided in the remaining life estimation device 20 itself, or may be installed outside the remaining life estimation device 20 and connected to the remaining life estimation device 20.

The receiving unit 21 is connected to be able to communicate with a crystal orientation map acquisition device 10 wirelessly or by wire. The receiving unit 21 receives from the crystal orientation map acquisition device 10 a map generated based on a backscatter diffraction pattern by backscattered electrons from a material when the material is irradiated with an electron beam.

The material is, for example, a metal material having crystal grains (steel material containing iron as a main component, non-ferrous metal material containing a metal other than iron such as aluminum, titanium, magnesium, nickel, or copper as a main component, etc.). In addition, the material may be various other crystalline materials, and is not limited to the examples listed here.

In addition, the receiving unit 21 may receive a "surface crack length" for a crack occurred in the material. The surface crack length will be described later.

The crystal orientation map acquisition device 10, for example, performs EBSD (Electron BackScatter Diffraction) measurement on a material in which a crack has occurred. Then, the crystal orientation map acquisition device 10 generates a map. The map is a map of crystal orientations of the material generated based on a backscatter diffraction pattern.

The "crack" handled in the present disclosure is assumed to have occurred when the material is placed in an environment at a temperature range from room temperature to about 600°C. In this temperature range, cracks are said to propagate within crystal grains. On the other hand, at temperatures higher than this temperature range, cracks propagate along grain boundaries, and the fracture mode is different.

The crystal orientation map acquisition device 10 samples a longitudinal cross section at a location where a crack has occurred in the material, performs EBSD measurement, and generates a map. For example, the longitudinal cross section to be sampled is a plane passing through the starting point of the crack and perpendicular to the surface of the material.

The database 23 stores various information used for estimation by the controller 25. For example, the database 23 stores a relationship between index values and load conditions. The relationship between index values and load conditions may be stored in a table format or may be stored by an approximate expression.

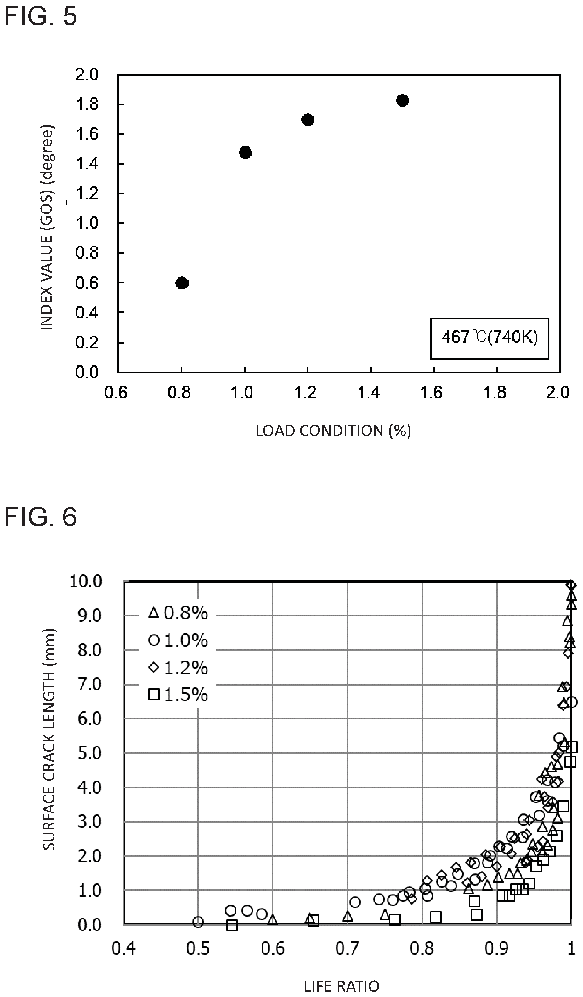

"Load condition" is a parameter characterizing the magnitude of strain when a strain test is performed on a material. For example, when a strain test is performed in which the length of the material expands and contracts by "X%", the "load condition" is represented by "X%". In Fig. 5, "0.8%", "1.0%", "1.2%", and "1.5%" are shown as parameters indicating "load conditions". The "load conditions" stored in the database 23 are not limited to these, and the "load conditions" to be stored are determined by strain tests performed on the material in advance.

"Index value" is a parameter characterizing the magnitude of strain in crystal grains contained in a material when a strain test under a predetermined "load condition" is performed.

For example, for a map obtained by EBSD measurement of a material subjected to a strain test under a predetermined "load condition", an average value of crystal orientations at pixels in crystal grains may be calculated, and an average of differences of crystal orientation at the pixels from the average value may be used as the index value. That is, the index value may be GOS (Grain Orientation Spread).

Alternatively, a value indicating an average of differences between crystal orientation at an adjacent pixel adjacent to a pixel and crystal orientation at the pixel may be used as the index value, wherein the pixel is included in the map and is within a crystal grain, and the adjacent pixel is within the crystal grain contained in the material. That is, the index value may be KAM (Kernel Average Misorientation).

As shown in Fig. 5, the database 23 stores a relationship between an average value of index values and load conditions. By using this relationship, it is possible to estimate the "load condition" for a material whose "load condition" that led to the occurrence of a crack is unknown. Specifically, EBSD measurement is performed on a material in which a crack has occurred, and an index value is calculated based on a map obtained by EBSD measurement. Then, using the "relationship between an average value of index values and load conditions", the "load condition" that led to the occurrence of the crack can be estimated from the calculated index value.

The database 23 stores a relationship between surface crack length and life ratio for each load condition. The relationship between surface crack length and life ratio may be stored in a table format or may be stored by an approximate expression.

"Surface crack length" is the length of a crack that occurred on the surface of a material when a strain test under a predetermined "load condition" is performed. As the number of loads applied in the strain test increases, the "surface crack length" increases.

"Life ratio" is a value obtained by normalizing the number of loads applied in a strain test by dividing it by the number of loads when the material fractured, when a strain test under a predetermined "load condition" is performed. For example, when the number of loads when the material fractured is 100,000 times, the "life ratio" of a material in which the number of loads applied in the strain test is still 50,000 times is 50,000 times / 100,000 times = 0.5. Therefore, the "life ratio" can take a value from 0 to 1.

As shown in Fig. 6, the database 23 stores a relationship between surface crack length and life ratio for each load condition. By using this relationship, it is possible to estimate the "life ratio" for a material whose "life ratio" is unknown based on the "load condition" and "surface crack length". Specifically, the load condition is estimated for a material in which a crack has occurred. Also, the surface crack length on the surface of the material is measured. Then, using the "relationship between surface crack length and life ratio" corresponding to the estimated load condition, the life ratio can be estimated based on the measured surface crack length.

The operation unit 27 is an input device that allows a user of the remaining life estimation device 20 to perform operations. For example, the operation unit 27 is a keyboard, a mouse, a trackball, a touch panel, or the like. The operation unit 27 is not limited to the examples listed here. The operation content of the user input via the operation unit 27 is transmitted to the controller 25.

In addition, the operation unit 27 may receive a "surface crack length" for a crack occurred in the material from the user.

The display unit 29 displays information received from the controller 25. For example, it displays the remaining life of the material estimated by the controller 25 described later.

The display unit 29 may be a display that displays graphics and characters by combining a plurality of display pixels, or may be a rotating light, a buzzer, or the like. The display unit 29 is not limited to the examples listed here.

The controller 25 (control unit) is a general-purpose computer including a CPU (Central Processing Unit), memory, and an input/output unit. A computer program (remaining life estimation program) for functioning as the remaining life estimation device 20 is installed in the controller 25. By executing the computer program, the controller 25 functions as a plurality of information processing circuits (251, 253, 255, 257) provided in the remaining life estimation device 20. The computer program (remaining life estimation program) may be stored in a storage medium readable and writable by a computer.

In the present disclosure, an example of implementing the plurality of information processing circuits (251, 253, 255, 257) by software is shown. However, it is also possible to prepare dedicated hardware for executing each information processing shown below and configure the information processing circuits (251, 253, 255, 257). Also, the plurality of information processing circuits (251, 253, 255, 257) may be configured by individual hardware.

As shown in Fig. 1, the controller 25 includes a specific range extraction unit 251, an index value generation unit 253, a load condition specification unit 255, and a life ratio estimation unit 257 as a plurality of information processing circuits (251, 253, 255, 257).

The specific range extraction unit 251 extracts from the received map a range of a predetermined number of crystal grains up to a propagation plane of a crack occurred in the material as a specific range. For example, the specific range extraction unit 251 sets the predetermined number as two and extracts a range consisting of a crystal grain facing the propagation plane of the crack and a crystal grain adjacent to the crystal grain facing the propagation plane of the crack.

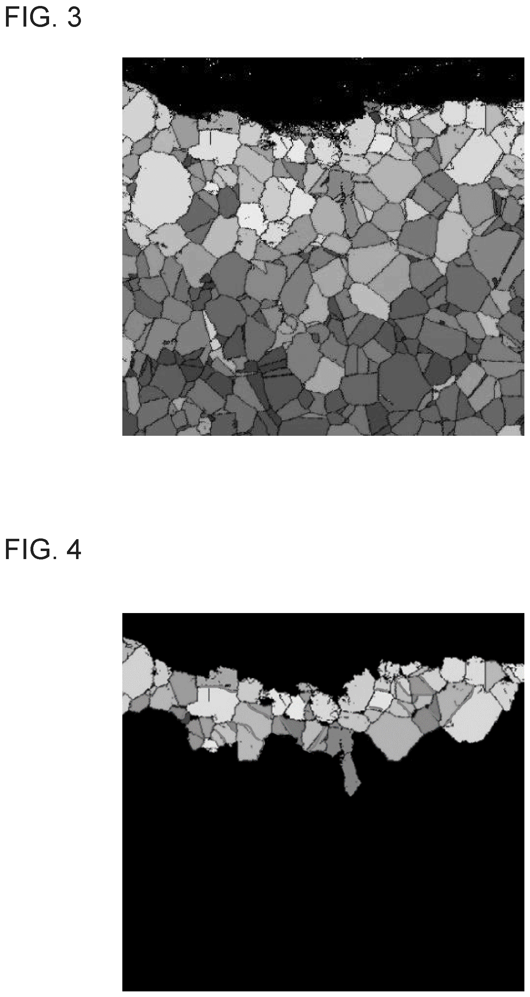

Fig. 3 is a diagram showing an example of a map. Fig. 4 is a diagram showing an example of a map from which only a specific range is extracted. In Figs. 3 and 4, the propagation direction of the crack is the direction from left to right in the figure. Also, the propagation plane of the crack is shown as a boundary line between the upper black region in the figure and the gray region in contact with the black region. In Figs. 3 and 4, twin boundaries are also shown in addition to grain boundaries of crystal grains.

The predetermined number is set to two for the purpose of extracting the plastic zone around the crack. For example, the length R from the propagation plane of the crack regarding the plastic zone can be evaluated by the following equation: R = 1/2π × (K/σ)^2

Here, σ is the yield strength, and K is the stress intensity factor. σ is known from standard values, and K can be estimated from the results of crack propagation tests.

The crack propagation rate of the portion of the material to be evaluated is derived from the relationship between crack length and number of cycles. Then, by referring to the results of crack propagation tests, the stress intensity factor can be estimated. When the estimated K is substituted into the above equation, R was approximately 40 µm. In the material used in the present disclosure, two crystal grains corresponded exactly, so the predetermined number is set to two.

Also, a length of the specific range along a propagation direction of the crack, or a direction perpendicular to a surface of the material, may be five times or more a diameter of crystal grains contained in the material. And, a length of the specific range along a propagation direction of the crack, or a direction perpendicular to a surface of the material, may be 25 times or less a diameter of crystal grains contained in the material.

The reason for setting the length of the specific range to five times or more the diameter of crystal grains contained in the material is explained as follows. Index values (for example, GOS, KAM) calculated for crystal grains have variation for each crystal grain. Therefore, in order to reduce the influence on estimation due to variation, it is required to evaluate at least 10 crystal grains. Therefore, the length of the specific range is set to five times or more the diameter of crystal grains contained in the material. In the material used in the present disclosure, since the crystal grains had a size of about 10 to 20 µm, if there is a measurement width of 100 µm, 10 or more crystal grains will be included when two crystal grains are extracted from the propagation plane of the crack.

The reason for setting the length of the specific range to 25 times or less the diameter of crystal grains contained in the material is explained as follows. In the initial stage of crack occurrence, the crack propagates relatively slowly. On the other hand, after a life ratio of 0.8, the crack propagates rapidly, and the error during estimation is large. Assuming a surface crack length of 1 mm at the initial stage of crack occurrence and a semi-elliptical crack, in the material used in the present disclosure, it can be considered that the crack propagates internally up to 0.25 mm (250 µm) as the initial crack stage. Therefore, it is required to measure 250 µm or less. Since the crystal grains had a size of about 10 to 20 µm, the length of the specific range is set to 25 times or less the diameter of crystal grains contained in the material.

The index value generation unit 253 generates an index value based on crystal orientation of the material in the specific range.

For example, the index value generation unit 253 may calculate as the index value a value indicating an average of differences between crystal orientation at an adjacent pixel adjacent to a pixel and crystal orientation at the pixel, wherein the pixel belongs to the map and is within a crystal grain contained in the material. That is, the index value generation unit 253 may calculate GOS (Grain Orientation Spread).

Also, the index value generation unit 253 may calculate an average value of crystal orientations at pixels in crystal grains contained in the material. Then, the index value generation unit 253 may calculate as the index value a value indicating an average of differences of crystal orientation at the pixels from the average value. That is, the index value generation unit 253 may calculate KAM (Kernel Average Misorientation).

In addition, the index value generation unit 253 may calculate as the index value a value obtained by averaging orientation differences of adjacent pixels within crystal grains (GAM (Grain Average Misorientation)). The index value generation unit 253 may calculate as the index value a contrast difference in an inverse pole figure orientation map (Inverse Pole Figure) based on the map. The index value generation unit 253 may calculate as the index value a contrast difference in the map.

In addition, the index value generation unit 253 may use as the index value an Image Quality (IQ (Image Quality) value), which is an index representing the quality of the pattern in addition to crystal orientation obtained during EBSD measurement. Also, the index value generation unit 253 may use as the index value a Confidence Index (CI (Confidence Index) value) obtained during EBSD measurement. Also, the index value generation unit 253 may use as the index value a Fit value obtained during EBSD measurement. The Fit value has the meaning of both the IQ value and the CI value, and becomes a large value where the strain is large.

The load condition specification unit 255 specifies a load condition based on the index value in the specific range. For example, the load condition specification unit 255 specifies the load condition based on a specific average value that is an average of the index values in the specific range.

Specifically, the load condition specification unit 255 reads the "relationship between an average value of index values and load conditions" stored in the database 23. Then, the load condition specification unit 255 specifies the "load condition" corresponding to the index value calculated by the index value generation unit 253 in the relationship between an average value of index values and load conditions. Thereby, the load condition specification unit 255 estimates the "load condition" for a material whose "load condition" that led to the occurrence of a crack is unknown.

The life ratio estimation unit 257 estimates the remaining life of the material based on the surface crack length of the crack by referring to a relationship between surface crack length and life ratio under the load condition.

Specifically, the life ratio estimation unit 257 reads the "relationship between surface crack length and life ratio" stored in the database 23. At that time, the life ratio estimation unit 257 reads the "relationship between surface crack length and life ratio" corresponding to the "load condition" specified by the load condition specification unit 255. Also, the life ratio estimation unit 257 reads the surface crack length for the crack occurred in the material.

Then, the life ratio estimation unit 257 specifies the "life ratio" corresponding to the surface crack length in the relationship between surface crack length and life ratio. Thereby, the life ratio estimation unit 257 estimates the "life ratio" for a material whose "life ratio" is unknown based on the "load condition" and "surface crack length".

The remaining life estimated by the life ratio estimation unit 257 is displayed to the user via the display unit 29.

### (Processing Procedure of Remaining Life Estimation Device)

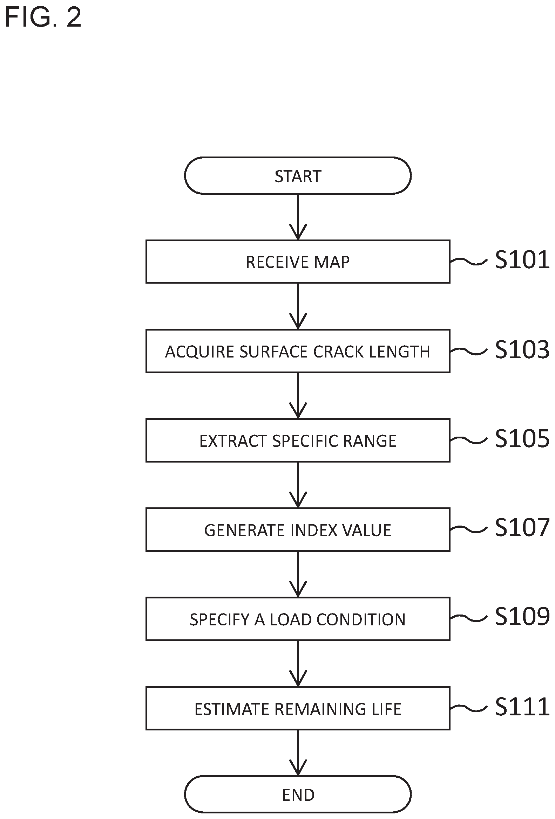

Fig. 2 is a flowchart showing a processing procedure of the remaining life estimation device.

Before the processing of the flowchart shown in Fig. 2 is started, it is assumed that the "relationship between index values and load conditions" and the "relationship between surface crack length and life ratio" are stored in the database 23. The "relationship between index values and load conditions" and the "relationship between surface crack length and life ratio" stored in the database 23 are assumed to be determined based on the results of strain tests performed on the material in advance.

In step S101, the receiving unit 21 receives a map generated based on a backscatter diffraction pattern by backscattered electrons from a material (a material whose "load condition" and "remaining life" are unknown) that is a target of remaining life estimation when the material is irradiated with an electron beam.

In step S103, the receiving unit 21 acquires a surface crack length for a crack occurred in the material that is the target of remaining life estimation. Instead of acquiring the surface crack length by the receiving unit 21, the surface crack length may be received via the operation unit 27.

In step S105, the specific range extraction unit 251 extracts from the received map a range of a predetermined number of crystal grains up to a propagation plane of a crack occurred in the material as a specific range.

In step S107, the index value generation unit 253 generates an index value based on crystal orientation of the material in the specific range.

In step S109, the load condition specification unit 255 specifies a load condition based on the index value in the specific range.

In step S111, the life ratio estimation unit 257 estimates the remaining life of the material based on the surface crack length of the crack by referring to a relationship between surface crack length and life ratio under the load condition.

### (Effects of Embodiment)

As described in detail above, the remaining life estimation method, remaining life estimation device, and remaining life estimation program according to the present disclosure acquire a map generated based on a backscatter diffraction pattern by backscattered electrons from a material when the material is irradiated with an electron beam. From the map, a range of a predetermined number of crystal grains up to a propagation plane of a crack occurred in the material is extracted as a specific range. An index value based on crystal orientation of the material in the specific range is generated. A load condition is specified based on the index value in the specific range. The remaining life of the material is estimated based on the surface crack length of the crack by referring to a relationship between surface crack length and life ratio under the load condition.

Thereby, it is possible to determine the tip position of a crack actually occurred in a material and the load condition related to the strain that caused the crack, and estimate the remaining life of the material. In particular, it is possible to estimate the load condition in the usage environment of the material based on a crack occurred in a material actually used in a product or the like. Furthermore, the remaining life can be estimated. As a result, knowledge about the usage environment of the material can be obtained. Furthermore, it can be useful for estimating the remaining life of the product itself in which the material is used.

In the remaining life estimation method, remaining life estimation device, and remaining life estimation program according to the present disclosure, the load condition may be specified based on a specific average value that is an average of the index values in the specific range. Thereby, even when there is variation for each crystal grain in the index value calculated for crystal grains, the influence on estimation due to variation is suppressed. As a result, it is possible to accurately estimate the load condition and remaining life of the material.

In the remaining life estimation method, remaining life estimation device, and remaining life estimation program according to the present disclosure, the predetermined number may be two. The plastic zone around the crack can be accurately extracted. Since it is possible to focus on the plastic zone around the crack, the load condition that caused the crack can be accurately specified.

In the remaining life estimation method, remaining life estimation device, and remaining life estimation program according to the present disclosure, a length of the specific range along a propagation direction of the crack, or a direction perpendicular to a surface of the material, may be five times or more a diameter of crystal grains contained in the material. Thereby, even when there is variation for each crystal grain in the index value calculated for crystal grains, the influence on estimation due to variation is suppressed.

In the remaining life estimation method, remaining life estimation device, and remaining life estimation program according to the present disclosure, a length of the specific range along a propagation direction of the crack, or a direction perpendicular to a surface of the material, may be 25 times or less a diameter of crystal grains contained in the material. Thereby, it becomes possible to capture the situation at the initial stage of crack occurrence. As a result, it is possible to accurately estimate the load condition and remaining life of the material.

In the remaining life estimation method, remaining life estimation device, and remaining life estimation program according to the present disclosure, a value indicating an average of differences between crystal orientation at an adjacent pixel adjacent to a pixel and crystal orientation at the pixel may be calculated as the index value. Here, the adjacent pixel belongs to the map and is within a crystal grain contained in the material. Thereby, it becomes possible to capture the distribution of differences in crystal orientation at the scale of crystal grain size. Thereby, it is possible to determine the tip position of a crack actually occurred in a material and the load condition related to the strain that caused the crack, and estimate the remaining life of the material.

In the remaining life estimation method, remaining life estimation device, and remaining life estimation program according to the present disclosure, an average value of crystal orientations at pixels in crystal grains contained in the material may be calculated. A value indicating an average of differences of crystal orientation at the pixels from the average value may be calculated as the index value. Thereby, it becomes possible to capture local changes in crystal orientation. Thereby, it is possible to determine the tip position of a crack actually occurred in a material and the load condition related to the strain that caused the crack, and estimate the remaining life of the material.

Each function shown in the above embodiment can be implemented by one or more processing circuits. Processing circuits include programmed processors, electrical circuits, etc., and also include devices such as application-specific integrated circuits (ASIC), or circuit components arranged to perform the described functions.

According to the present disclosure, it becomes possible to easily estimate damage and remaining life of materials. Therefore, for example, it can contribute to Goal 12 "Ensure sustainable consumption and production patterns" of the Sustainable Development Goals (SDGs) led by the United Nations.

Although some embodiments have been described, modifications or variations of the embodiments can be made based on the above disclosure. All components of the above embodiments and all features described in the claims may be individually extracted and combined as long as they do not contradict each other.

The entire content of Japanese Patent Application No. 2024-002016 (filing date: January 10, 2024) is incorporated herein by reference.

### REFERENCE SIGNS LIST

- 10: crystal orientation map acquisition device
- 20: remaining life estimation device
- 21: receiving unit
- 23: database
- 25: controller
- 251: specific range extraction unit
- 253: index value generation unit
- 255: load condition specification unit
- 257: life ratio estimation unit
- 27: operation unit
- 29: display unit

## Claims

1. A remaining life estimation method comprising:
acquiring a map generated based on a backscatter diffraction pattern by backscattered electrons from a material when the material is irradiated with an electron beam;
extracting from the map a range of a predetermined number of crystal grains up to a propagation plane of a crack occurred in the material as a specific range;
generating an index value based on crystal orientation of the material in the specific range;
specifying a load condition based on the index value in the specific range; and
estimating a remaining life of the material based on a surface crack length of the crack by referring to a relationship between surface crack length and life ratio under the load condition.

2. The remaining life estimation method according to claim 1, wherein the load condition is specified based on a specific average value that is an average of the index values in the specific range.

3. The remaining life estimation method according to claim 1, wherein the predetermined number is two.

4. The remaining life estimation method according to claim 1, wherein a length of the specific range along a propagation direction of the crack, or a direction perpendicular to a surface of the material, is five times or more a diameter of crystal grains contained in the material.

5. The remaining life estimation method according to claim 1, wherein a length of the specific range along a propagation direction of the crack, or a direction perpendicular to a surface of the material, is 25 times or less a diameter of crystal grains contained in the material.

6. The remaining life estimation method according to any one of claims 1 to 5, wherein a value indicating an average of differences between crystal orientation at an adjacent pixel adjacent to a pixel and crystal orientation at the pixel is calculated as the index value, wherein the pixel belongs to the map and is within a crystal grain contained in the material.

7. The remaining life estimation method according to any one of claims 1 to 5, comprising:
calculating an average value of crystal orientations at pixels in crystal grains contained in the material; and
calculating as the index value a value indicating an average of differences of crystal orientation at the pixels from the average value.

8. A remaining life estimation device comprising:
an acquisition unit that acquires a map generated based on a backscatter diffraction pattern by backscattered electrons from a material when the material is irradiated with an electron beam; and
a controller, wherein the controller:
extracts from the map a range of a predetermined number of crystal grains up to a propagation plane of a crack occurred in the material as a specific range;
generates an index value based on crystal orientation of the material in the specific range;
specifies a load condition based on the index value in the specific range; and
estimates the remaining life of the material based on a surface crack length of the crack by referring to a relationship between surface crack length and life ratio under the load condition.

9. A remaining life estimation program for processing a map generated based on a backscatter diffraction pattern by backscattered electrons from a material when the material is irradiated with an electron beam, the program causing a computer to execute:
extracting from the map a range of a predetermined number of crystal grains up to a propagation plane of a crack occurred in the material as a specific range;
generating an index value based on crystal orientation of the material in the specific range;
specifying a load condition based on the index value in the specific range; and
estimating the remaining life of the material based on a surface crack length of the crack by referring to a relationship between surface crack length and life ratio under the load condition.
